# EUROPEAN PATENT APPLICATION

(11) **EP 4 539 438 A1**
(43) Date of publication of application: **16.04.2025**
(21) Application number: 24206266.9
(22) Date of filing: 11.10.2024
(51) Int. Cl.: H04L 69/22, H04L 67/10

(54) **VIRTUALIZING NETWORK CONNECTION REQUESTS AND TRAFFIC USING PROGRAMMABLE POLICIES**

(30) Priority: 12.10.2023 WO PCT/CN2023/124352; 01.11.2023 US 202318558448
(71) Applicant: Mellanox Technologies, Ltd., 2069200 Yokneam (IL)
(72) Inventor: BARANSI, Moosa, 2069200 Yokneam (IL); SUR, Sayantan, 2069200 Yokneam (IL); YU, Lijun, 2069200 Yokneam (IL); EFRAIM, Yossef, 2069200 Yokneam (IL); MOSHREF JAVADI, Masoud, 2069200 Yokneam (IL); PERELSTEIN, Tzachi, 2069200 Yokneam (IL); BENDA, Ido Moshe, 2069200 Yokneam (IL); SHULER, Shahaf, 2069200 Yokneam (IL); BEN DAVID, Omri, 2069200 Yokneam (IL); BAR-ILAN, Eliav, 2069200 Yokneam (IL)
(74) Representative: Mathys & Squire

(57) **Abstract**

Systems and methods are directed toward virtualizing network connections to transparently apply one or more connection policies responsive to features of a connection request. A network connection request may be analyzed to determine one or more features that can be used to select a connection policy for the request. A modified network connection may be established using one or more connection parameters from the connection policy. As incoming data transmission are received, the data packages may be intercepted and then modified for transmission according to the connection policy.

## Description

### CROSS-REFERENCE TO RELATED APPLICATIONS

This application claims the priority of PCT International Application No. PCT/CN2023/124352, filed on October 12, 2023, the disclosure of which is incorporated by reference herein in its entirety for all intents and purposes.

### TECHNICAL FIELD

At least one embodiment pertains to virtualizing communications between different networked components to adjust communication parameters independent from underlying hardware.

### BACKGROUND

Networked components, such as compute resources, may be constrained or otherwise limited by underlying hardware resources. For example, a compute resource may be used to execute a virtual machine (VM) or some compute operation via a network connection using one or more network interface cards. Individual links between compute resources may be arranged to provide a one-to-one correspondence between resources and links, which may lead to problems with scaling from both operational and computational perspectives. The underlying hardware resources may also act as a bottleneck because they may be unable to accommodate developments in networking and/or may be pre-programmed with certain configurations that are not compatible with desired routing specifications. Even if underlying components are upgraded over time, the cost of upgrades may be unreasonable and/or workloads executing on the resources using the hardware may need to be modified to communicate with the new hardware components.

### SUMMARY

The invention is defined by the claims. In order to illustrate the invention, aspects and embodiments which may or may not fall within the scope of the claims are described herein.

Systems and methods are directed toward virtualizing network connections to transparently apply one or more connection policies responsive to features of a connection request. A network connection request may be analyzed to determine one or more features that can be used to select a connection policy for the request. A modified network connection may be established using one or more connection parameters from the connection policy. As incoming data transmission are received, the data packages may be intercepted and then modified for transmission according to the connection policy.

Any feature of one aspect or embodiment may be applied to other aspects or embodiments, in any appropriate combination. In particular, any feature of a method aspect or embodiment may be applied to an apparatus aspect or embodiment, and vice versa.

### BRIEF DESCRIPTION OF THE DRAWINGS

Various embodiments in accordance with the present disclosure will be described with reference to the drawings, in which:
FIG. 1A illustrates an example environment for establishing a networked connection between a client and server, in accordance with at least one embodiment;
FIG. 1B illustrates an example schematic view of a networking stack, in accordance with at least one embodiment;
FIG. 2 illustrates an example environment for virtualizing a control path for establishing a network connection, in accordance with at least one embodiment;
FIG. 3 illustrates an example environment for a programmable and virtual network connection, in accordance with at least one embodiment;
FIG. 4A illustrates an example process for forming a network connection, in accordance with at least one embodiment;
FIG. 4B illustrates an example process for forming a network connection, in accordance with at least one embodiment;
FIG. 5A illustrates an example process for forming a network connection, in accordance with at least one embodiment;
FIG. 5B illustrates an example process for forming a network connection, in accordance with at least one embodiment;
FIG. 6 illustrates components of a distributed system that can be utilized to update or perform inferencing using a machine learning model, according to at least one embodiment;
FIG. 7 illustrates an example data center system, according to at least one embodiment;
FIG. 8 illustrates a computer system, according to at least one embodiment;
FIG. 9 illustrates a computer system, according to at least one embodiment;
FIG. 10 illustrates at least portions of a graphics processor, according to one or more embodiments; and
FIG. 11 illustrates at least portions of a graphics processor, according to one or more embodiments.

### DETAILED DESCRIPTION

In the following description, various embodiments will be described. For purposes of explanation, specific configurations and details are set forth in order to provide a thorough understanding of the embodiments. However, it will also be apparent to one skilled in the art that the embodiments may be practiced without the specific details. Furthermore, well-known features may be omitted or simplified in order not to obscure the embodiment being described.

The systems and methods described herein may be used by, without limitation, non-autonomous vehicles or machines, semi-autonomous vehicles or machines (e.g., in an in-cabin infotainment or digital or driver virtual assistant application)), autonomous vehicles or machines, piloted and un-piloted robots or robotic platforms, warehouse vehicles, off-road vehicles, vehicles coupled to one or more trailers, flying vessels, boats, shuttles, emergency response vehicles, motorcycles, electric or motorized bicycles, aircraft, construction vehicles, trains, underwater craft, remotely operated vehicles such as drones, and/or other vehicle types. Further, the systems and methods described herein may be used for a variety of purposes, by way of example and without limitation, for machine control, machine locomotion, machine driving, synthetic data generation, model training or updating, perception, augmented reality, virtual reality, mixed reality, robotics, security and surveillance, simulation and digital twinning, autonomous or semi-autonomous machine applications, deep learning, environment simulation, object or actor simulation and/or digital twinning, data center processing, conversational artificial intelligence (AI), generative AI with large language models (LLMs), light transport simulation (e.g., ray-tracing, path tracing, etc.), collaborative content creation for 3D assets, cloud computing and/or any other suitable applications.

Disclosed embodiments may be comprised in a variety of different systems such as automotive systems (e.g., a control system for an autonomous or semi-autonomous machine, a perception system for an autonomous or semi-autonomous machine), systems implemented using a robot, aerial systems, medial systems, boating systems, smart area monitoring systems, systems for performing deep learning operations, systems for performing simulation operations, systems for performing digital twin operations, systems implemented using an edge device, systems incorporating one or more virtual machines (VMs), systems for performing synthetic data generation operations, systems implemented at least partially in a data center, systems for performing conversational AI operations, systems for performing generative AI operations using LLMs, systems for performing light transport simulation, systems for performing collaborative content creation for 3D assets, systems implemented at least partially using cloud computing resources, and/or other types of systems.

Approaches in accordance with various embodiments can be used to virtualize a control path between a compute resource and/or an application associated with the compute resource and an underlying networking component, such as a network interface card (NIC) and/or a host channel adapter (HCA). In at least one embodiment, the NIC and/or other networking component may include one or more data processing units (DPUs) including programming firmware instructions to receive a signal or message from a networked resource (e.g., instructions to create a new flow or connection) and, based on information associated with the connection and/or a workload for the connection, may modify or otherwise change one or more parameters of the new flow or connection in accordance with instructions executing on the DPU. The modification to the connection may be transparent to the compute resource such that an application executing on the compute resource associated with the connection, such as a virtual machine (VM) or other application, may interact with the NIC independent of the modifications to the connection. That is, one or more legacy applications may be executable without modification because connection parameter modifications are made at the DPU and not with the legacy application. In this manner, cloud service providers (CSPs) may inject and use their own trusted code to configure different communication parameters at the NIC using the DPU instead of making modifications at the resource level that would require changes to applications.

Systems and methods may implement a programmable network connection that may be used with legacy compute resources. In at least one embodiment, a CSP may use a variety of different network communication specifications, including but not limited to remote direct memory access (RDMA) over Converted Ethernet (RoCEv2). RoCEv2 may be used in datacenter communications to provide a reliable, high speed connection between different compute resources. While RoCEv2 provides a reliable, high speed connection, there may be limitations with underlying hardware components that may have strict, programmed networking policies that are vendor specific and not programmable by the end user (e.g., the CSPs). As a result, CSPs may be required to select cards with their desired policy, which cannot be changed as applications are modified and/or as traffic requirements associated with their environments change. Furthermore, CSPs may be constrained or limited when trying to establish their own parameters for virtualization, billing, and/or telemetry. Systems and methods of the present disclosure address and overcome these problems by decoupling the hardware for providing the network connection from the applications executing on the computer resources. For example, a VM may execute on the compute resource and include an API for interfacing with RDMA connections. Systems and methods may virtualize the connection layer such that the API may continue to communicate with the underlying hardware resource as if the connection has not changed, but the associated underlying hardware resource may use the DPU to receive signals from the API and modify network connections based on parameters that are programmable and established by the vendor, CSP, and/or combinations thereof. As a result, CSPs can inject their own customization into the system without changing or otherwise modifying the associated workloads. In this manner, multipathing and other network connection improvements may be implemented and used with legacy systems and CSPs can also dictate their own networking and multipathing policies. For example, different CSPs may establish logical profiles for associated VMs and/or workloads and, upon receiving requests to establish connections for the VMs and/or workloads, an associated policy may be selected for the connection. Various embodiments address and overcome the problems and inefficiencies with existing systems by proving a flexible solution for modifying different connection parameters independent of the executing application. Providing a virtual, programmable networking solution enables CSPs to specify different communication parameters, such as implementing multipathing in RoCEv2, to balance network needs, user performance requirements, and/or the like. Furthermore, systems and methods inject CSP code and policies at the interface (e.g., the DPU) so that users do not need to modify the applications in order to take advantage of the updated policies. In other words, the applications may be unaware of the virtualization, for example, due to one or more virtualization processes executing on firmware associated with the DPU (e.g., with a processor executing on the NIC). As a result, incoming path data messages are received and/or intercepted prior to sending to the application level, which allows one or more policies to be executed, such as to add and/or modify headers, among other options. For example, the DPU may intercept an incoming message, alter the packet payload, add and/or remove message segments, and configure different networking properties. Thereafter, the DPU may also create a custom work queue element (WQE) prior to transmission of the message. In at least one embodiment, the CSP may provide a set of callback functions for both an initialization phase (e.g., a control path) and a run-time phase (e.g., a data path) with specific DPU entry points. Furthermore, systems may also be configured such that management messages are in-bound on demand, meaning there will be no need for an external orchestrator.

Systems and methods of the present disclosure may be implemented using a variety of different underlying network protocols. For example, a client may be unaware of the underlying network connection and/or protocol used to form different connections. In this manner, CSPs may select a variety of different protocols based on different network parameters and/or underlying hardware. In at least one embodiment, a client may be under an impression that a certain connection uses one or more protocols, such as RoCEv2. However, systems and methods of the present disclosure may be used to implement a variety of different underlying protocols, regardless of what protocol the client and/or systems associated with the client believe are being used. In other words, a variety of different connections, including but not limited to raw ethernet connections, among others, may be used with systems and methods to establish a variety of different network connections based on one or more parameters or settings of the CSPs.

Various embodiments may be implemented responsive to client requests to establish connections and/or as part of a connection monitoring system in which existing quality of existing connections is monitored and one or more policies may be implemented to create or modify connections based, at least in part, on the quality. In other words, establishing and/or adjusting connections may not be based on an application request, but instead, based on a policy to monitor and improve existing network connections. For example, policies may be injected by CSPs with respect to different connection parameters and if it is determined that a parameter falls below an established threshold and/or that an improvement may be provided, one or more new connections may be established and/or traffic may be rerouted along connections, among other options. In this manner, different connection parameters may be modified and updated based on information collected by monitoring network traffic.

Variations of this and other such functionality can be used as well within the scope of the various embodiments as would be apparent to one of ordinary skill in the art in light of the teachings and suggestions contained herein.

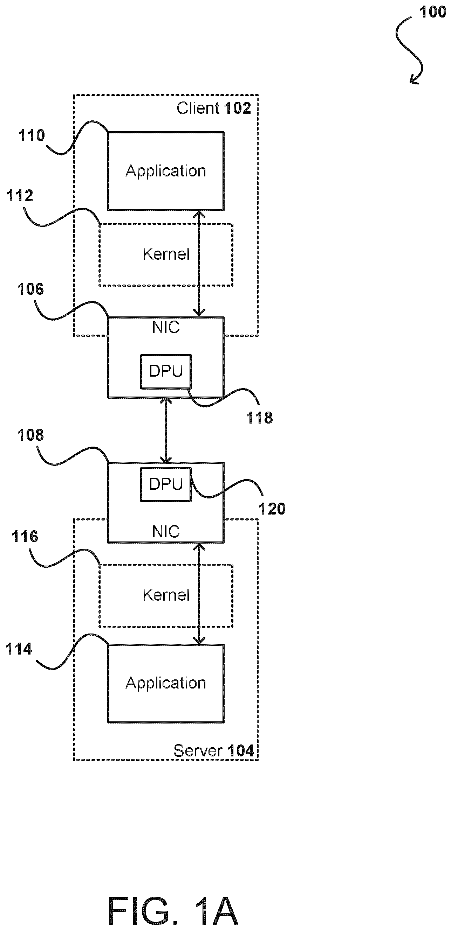

FIG. 1A illustrates an example environment 100 that can be used to transmit traffic (e.g., messages, data, etc.) between different computing devices, in accordance with at least one embodiment. The illustrated environment includes a client 102 and a server 104. The client 102 and the server 104 may include one or more computing devices that include processors, memories, input/output devices, and the like. For example, in at least one embodiment, the client 102 and the server 104 may form a portion of a compute node, such as a node associated with a datacenter. The compute node may be a networked cluster of one or more computing devices that can send and receive information across a network, such as the Internet, and may be networked to one or more additional computing devices. Furthermore, the client 102 and/or the server 104 may be connected within a common cluster. For example, each of the client 102 and the server 104 may be on a common rack within a data center. However, in various embodiments, the client 102 and the server 104 may be on different racks, within different clusters, associated with different nodes, and/or combinations thereof.

In at least one embodiment, the client 102 may submit a request to establish a connection to the server 104. The connection may be a direct access connection, such as an RDMA connection. RDMA enables two networked computers to exchange data in main memory without relying on the processor, cache, or operating system of either computer. RDMA may improve throughput and performance by freeing up resources, resulting in faster data transfer rates and lower latency between RDMA-enabled systems. RDMA systems provide a variety of advantages, including at least kernel bypass, zero-copy operations, and no central processing unit (CPU) involvement through the use of one or more RDMA-enabled systems, such as a NIC. Accordingly, RDMA helps increase throughput and decrease latency. RDMA may be particularly useful for applications that need either low latency (e.g., high performance computing (HPC)) or high bandwidth (e.g., cloud computing, HPC, etc.).

To establish an RDMA connection, each of the client device 102 and the server 104 may include and/or be associated with a NIC 106, 108 having RDMA properties and/or capabilities. The NICs 106, 108 may implement respective RDMA engines to create a channel to application memory of the associated devices. For example, the NIC 106 may establish a connection to an application 110 that bypasses a kernel 112. Similarly, the NIC 108 may establish a connection to an application 114 that bypasses a kernel 116. Accordingly, latency may be decreased by skipping various steps through the respective kernels 112, 116, which may require execution of one or more instructions on processors, which decreases the available resources for compute tasks. In this manner, the client 102 may be used to directly read data from main memory of the server 104 and write that data directly to the main memory of the client 102. Such applications may be suited for HPC applications, such as data centers providing processing capabilities for various applications, such as artificial intelligence, storage, and the like.

In at least one embodiment, the hardware associated with forming these connections is embedded within the NIC. For example, the respective NICs 106, 108 may include respective DPUs 118, 120. The DPUs 118, 120 may refer to one or more programmable processors that may be integrated into a system on a chip (SoC) that combines one or more programmable multicore CPUs, high-performance networking interfaces, and flexible/programmable acceleration engines. In at least one embodiment, the CPUs associated with the DPU may incorporate architectures that provide for tight coupling with remaining components of the CPU. Furthermore, the networking interfaces may be used to parse, process, and transfer data at line rates (e.g., the speed of the rest of the network). Furthermore, different embodiments, as noted herein, may enable programmability of the DPU such that one or more CSPs may upload their own trusted code. Accordingly, systems and methods may implement DPUs to enable isolated, bare-metal, and/or cloud-native computing platforms. In at least one embodiment, the DPUs may be embedded into one or more smart NICs.

In operation, performing data transfer with RDMA includes a process that may be referred to as registering memory. This process pins memory to inform the kernel (e.g., the OS) that certain memory is for RDMA communications with a given application. Pinning the memory may prevent the OS from swapping the memory. The NIC may then store the address. Various embodiments may also set permissions for different memory regions and establish different keys. A channel is formed from the NIC to the application, as shown by the arrows extending between NIC 106 and application 110, the arrows extending between NIC 108 and the application 114, and the arrows extending between the respective NICs 106, 108.

A variety of protocols may be implemented to support RDMA, such as InfiniBand, RoCE, and Internet Wide Area RDMA Protocol (iWARP), among others. Each of these protocols may have different physical and link layers, but still provide the direct communication between memory locations (e.g., the applications) using a connection formed via the NICs 106, 108. Embodiments of the present disclosure may be discussed with reference to RoCE and/or RoCEv2, which may include one or more different protocol versions that uses the User Datagram Protocol (UDP) and Internet Protocol (IP). The RoCE may include one or more features of InfiniBand while also providing a lighter weight, lower latency protocol than iWARP. In at least one embodiment, RoCE may further enable routing due to the UDP/IP headers.

Various embodiments may be used with RDMA connections to achieve higher performance with input/output (I/O) operations. These connections may be used to reduce power consumption, which may directly affect cooling requirements, while also permitting faster access to remote data due to bypassing of the kernel (e.g., the operating system). Furthermore, RDMA may be scaled. The connection between the client 102 and the server 104 may be formed over one or more networks, which may also be referred to as a communication fabric or an Ethernet fabric. The transmission media to create the communication link may include both physical components (e.g., cables, switches, NICs, etc.) and/or virtual components (e.g., firmware, adapters, etc.).

RDMA connections may be established between endpoints, which may be referred to as a queue pair (QP). For example, a first endpoint may be associated with the client 102, and a second endpoint may be associated with the server 104 at the end of a channel between the client 102 and the server 104. Each QP includes a sent queue and a receive queue and posts operations to these queues using one or more APIs, which may be referred to as a verb or verbs API. Additionally, embodiments may also include a completion queue (CQ) and/or a work queue (WQ) to track completed requests and/or prepare future instructions. For example, the WQ may schedule work to be done via the send and receive queues. Various embodiments and communications may be used with RDMA that do not incorporate each of the queues for each communication. For example, some requests may not receive a response. Additionally, some operations may be completed without generating an entity for the CQ. In at least one embodiment, an application may issue a job using a work request, which may include a pointer to a buffer. For example, the pointer may be for a message to be sent in the send queue and may show where an incoming message should be placed in the receive queue.

Moreover, RDMA transports may also be categorized as being reliable, unreliable, connected, or unconnected. A reliable transport refers to the use of acknowledgements to guarantee in-order delivery of messages, while an unreliable transport does not provide such a guarantee. A connected transport is one that has a one-to-one connection between QPs, but an unconnected transport refers to a QP that can communicate with multiple QPs. Systems and methods of the present disclosure may be used with one or more of these connection types

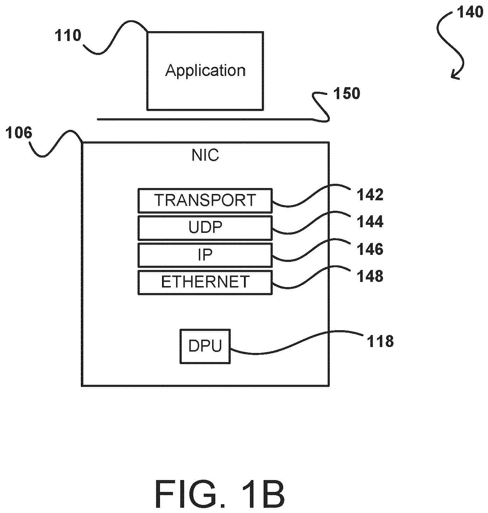

FIG. 1B illustrates a stack 140 for RDMA connections, which in this example uses version 2 of the RoCE protocol. In this example, the stack may also be preferred to as a protocol or network stack and is used to implement a computer networking protocol suite. The application 110 may be one or more applications or operations executing on a processor, such as a processor of a computing device, and may further be associated with one or more memory locations. The application 110 is used to post work requests, which may be in the form of a message to a queue (e.g., the send queue). The application 110 may be associated with the NIC 106, which may include hardware implements of different layers, among other options. For example, one or more adapters, drivers, or software implementations may be used to maintain different queues, manage overhead, and/or the like.

There may also be one or more software layers (not pictured). The software layers may be used to define the methods and mechanisms that an application needs to use the RDMA message transport service. For example, the software layer may describe methods that applications use to establish a channel between them, and may include various APIs, libraries, and the like. As noted herein, the software layer may be associated with a legacy application, and as a result, as different methods are systems are generated for network communications, such as the non-limiting example of multipathing, the software layer must be modified to enable the legacy applications to take advance of these improved connections. Accordingly, clients may manage and update a variety of different implementations based on the different connection types and/or providers, which may be time consuming, expensive, and prone to errors. Systems and methods overcome this problem by virtualizing communications between the application 110 and the NIC 106 such that incoming messages may be modified and connection protocols and/or parameters may be changed in accordance with one or more policies.

In this example, one or more network protocols are supported by the stack 140, including a transport layer 142, a UDP layer 144, an IP layer 146, and an ethernet layer 148. The transport layer 142 may also be referred to as an InfiniBand transport protocol. Further included is the UDP layer 144, which may be used to send messages (such as packets) over IP. The UDP layer 144 may enable rapid communications with limited overhead due to the reduction of error checking and correction associated with the protocol. The ethernet link layer 148 may be a protocol layer for delivery of information across a physical layer of a connection, such as wires or the like. The different layers may be used to packetize different messages, implement RDMA protocol, and assure reliable delivery. In at least one embodiment, each of these layers is used as a hardware implementation within the NIC 106, and as a result certain operations may be removed from the processor of the computing device itself, thereby reducing overhead and providing more processing capabilities to complete the tasks directed to the computing device. The illustrated embodiment also includes a verbs interface 150, which may be used to allow the application 110 to send and/or receive requests.

In operation, the application 110 may generate one or more messages and/or data streams, which may be referred to for clarity as being associated with one or both of a "control path" and a "data path." The control path may refer to an initialization path in which the parameters of the connections or links are generated, whereas the data path may refer to a run-time phase in which data and instructions associated with sending the data are sent. Systems and methods of the present disclosure virtualize the use of RDMA, where may also be referred to herein as "vRDMA" in order to modify different connection parameters for the data path transparently from the application 110. In other words, the application 110 may execute as if it were communicating directly with the NIC 106, but an incoming message may be intercepted, evaluated, and then modified in accordance with one or more policies, which may be provided by the CSP associated with the NIC 106. In this manner, the application 110 may continue to execute normally without modifications while changes to connection parameters are offloaded to the NIC 106 (e.g., to the DPU 118).

Various embodiments of the present disclosure may be implemented to provide CSP customization of different communication policies within the NIC 106 without changing or modifying features of the application 110. For example, the NIC 106 may support receiving trusted code from different CSPs in order to modify different communication policies, which may include routing policies such as implementing round robin, weighted round robin, minimum round trip, and various other policies. Changes may also be implemented as firmware updates or changes to the DPU 118, thereby enabling continued updates and modifications as the CSP evaluates and/or modifies desired routing, telemetry, billing, and/or virtualization applications. In at least one embodiment, different policies may be based on a particular entity associated with the application 110 and/or on features of the communications, such as a type of workload being transmitted. For example, it may be desirable to optimize certain workloads for low latency while others may be optimized for high throughput or to implement fail over for long-running applications, among other examples. Systems and methods may implement various policies by receiving an incoming message to establish a connection, evaluating one or more portions of the messages, and then modifying or otherwise changing one or more parameters in accordance with the policies. Systems and methods may also implement various policies by monitoring one or more connection parameters, evaluating features of the connection parameters against one or more thresholds, and then modifying or otherwise changing one or more connection parameters in accordance with the policies, such as adding new connections and/or changing underlying parameters of existing connections, among other options. Changes may be executed when establishing the connection and/or when data is transmitted along the connection. In at least one embodiment, modification may refer to changes to a header and not to the actual payload or message itself. For example, a header may be expanded, shortened, or changed. Additionally, a second header may be added "on top" to establish connections between different components. In this manner, when data for the associated connection is received at the NIC 106, the data may be passed in accordance with the updated connection settings. As another example, if a new connection is established, incoming data may be routed to the new connection. Accordingly, systems and methods may provide a programmable NIC 106 that may virtualize different communication layers between various applications to permit policy updates for different communication parameters.

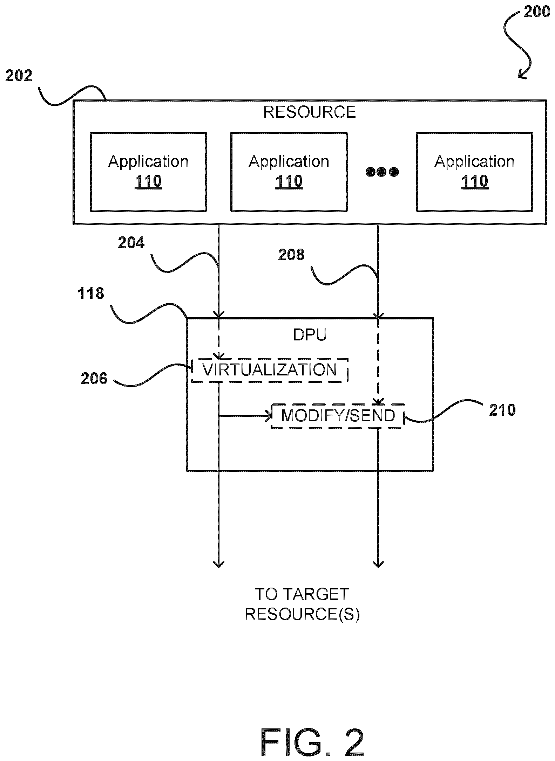

FIG. 2 illustrates a schematic diagram 200 that may be used with embodiments of the present disclosure. In this example, a resource 202 may correspond to one or more resources within a distributed computing environment, such as a server, compute unit (e.g., GPU, CPU, etc.), and/or combinations thereof. The resource 202 may be used to execute one or more applications 110, such as various VMs or other workloads. The resource 202 may be associated with the DPU 118, as discussed herein, which may further be part of the NIC, to facilitate network communications with one or more other resources 202 of the distributed computing environment. Embodiments of the present disclosure may facilitate virtualization of one or more paths of the communication protocols, such as a control path 204, to enable the DPU to evaluate, modify, and then facilitate transmission of different messages, streams, workflows, etc. from the resource 202.

In this example, a control path 204 is represented by an arrow between the resource 202 and the DPU 118, in which the arrow continues to a virtualization engine 206, which is provided by way of non-limiting example. The control path 204 may include instructions and/or a message requesting creation of a new connection or path. For example, the control path 204 may include a request from one or more applications 110, which may include VMs or programs executing on different VMs, to create one or more connections to an associated resource. As the message is received at the DPU 118 (e.g., to the NIC) the DPU 118 may evaluate one or more portions of the message to determine different connection parameters. For example, virtualization engine 206 may execute stored instructions to identify different recipients of the intended workload, identify properties of an intended workload, identify desired network connection parameters, and/or the like. The virtualization engine 206 may also receive information for evaluating the requests out-of-band, for example as a separate message and/or as a specific information component provided to the DPU 118. In various embodiments, the virtualization engine 206 may execute transparent to the resource 202 and/or associated applications 110 such that legacy applications may continue to execute in their existing capacity without updating their underlying parameters. For example, a legacy application may generate messages to establish an RDMA connection, but the existing parameters for the legacy application may not be capable of specifying different routing policies and/or may be tuned to prior technologies that no longer provide the desired operational efficiencies of newer technologies. Systems and methods of the present disclosure permit the legacy applications to continue operating with their existing parameters because by virtualizing the control path 204, the DPU 118 can evaluate and modify the connection parameters that are used with an associated data path 208 after the connection is created. For example, after the connection is established, the data path 208 may then use a modify/send engine 210 to adjust one or more parameters of the data. For example, the modify/send engine 210 may be used to modify or add header and/or payload data, among other options. Modifications using either or both of the virtualization engine 206 and/or the modify/send engine 210 may be based, at least in part, on CSP parameters that can be executed using the DPU 118. In this manner, CSPs can modify and update different communication policies as needed.

In at least one embodiment, the DPU 118 may include pre-stored instructions and/or instructions that can be provided and updated by the CSP, for example, using a firmware update or the like. The instructions may be used to implement different routing polices, to establish different connections based on metrics, and/or the like. In the non-limiting example of routing policies, a particular routing policy may be selected based on information associated with the workflows, such as a sender/receiver, a type of workload, and/or the like. For example, a multipathing policy may be implemented for particular types of workloads or clients, such as round robin, weighted round robin, minimum round trip time, and/or the like. The policy may be selected based on one or more sets of stored profile information, which may be used to compare one or more features of the request to establish the connection and/or the data stream to select and implement a particular policy. The policies may include various different connection parameters that can be adjusted without receiving instructions from the application 110. For example, as data is transmitted to a desired endpoint, the DPU 118 may intercept the data packet prior to transmission to the end point, modify one or more portions in accordance with a desired policy, and then cause transmission of the data packet. In this manner, the implementation and use of different routing policies, among other connection parameters, is virtualized and disassociated with the application 110 and offloaded to the DPU 118, which enables periodic updates and modifications from the CSPs. Systems and methods also permit the CSPs to inject code for a variety of other purposes, such as billing, telemetry, and/or the like. Moreover, systems and methods also permit the CSPs to establish different policies to monitor network connections, such as for quality, and then to create and/or remove one or more connections based on the quality of the network. Accordingly, various functions can be offloaded to the DPU 118 for management of data connections.

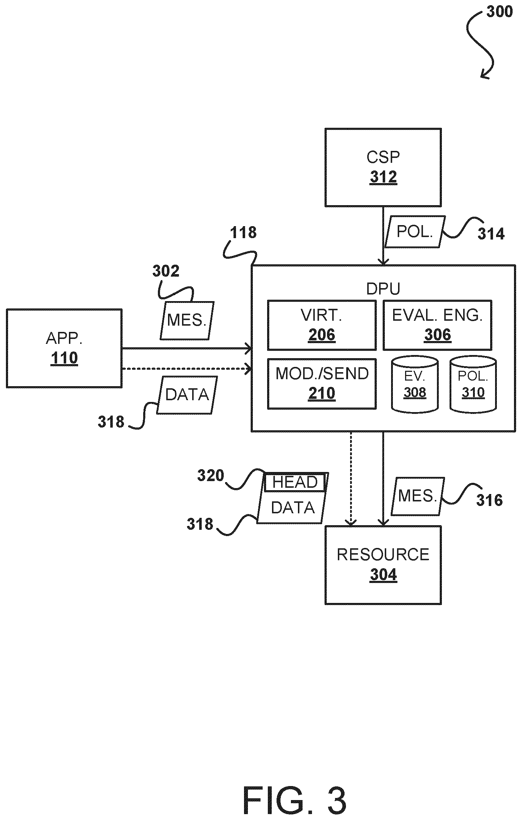

FIG. 3 illustrates an example environment 300 that may be used with embodiments of the present disclosure. In this example, the application 110 transmits a message 302 to the DPU 118 (e.g., to the NIC) to establish a connection to a resource 304. As noted herein, the example of the application transmitting the message 302 is by way of non-limiting example and systems and methods may also be implemented responsive to monitoring existing network connections, among other options. In at least one embodiment, the message 302 may be considered as part of an initialization step and may be transmitted via the control path, as noted herein, where the virtualization engine 206 may be used allow the DPU 118 to grab the data path messages (e.g., data of the workflow) prior to transmission. In at least one embodiment, an evaluation engine 306 may evaluate or otherwise parse through one or more portions of the package associated with the message 302. For example, the evaluation engine 306 may evaluate a header of the message 302 to identify the sender, the recipient, features of the associated workload to be transmitted, and/or the like. In at least one embodiment, the evaluation engine 306 may then determine whether one or more properties of the connection to the resource 304 should be modified based, for example, on information extracted from an evaluation datastore 308 and/or a policy datastore 310. The respective datastores 308, 310 may be populated and monitored by a CSP 312 that may inject code for use by the DPU 118, such as a policy update 314 that may be added to the policy datastore 310 to control one or more communication parameters associated with the data path. By way of example, the policy update 314 and/or other policies may establish policies for multipath spreading, among other various features. The policy update 314 may also include one or more quality monitoring metrics to enable the DPU 118 to monitor existing network connections, determine a quality of the connection, and then, based at least on the quality, determine whether or not to establish one or more new connections, among other options. Additionally, the CSP 312 may send one or more profile updates for the evaluation datastore 308 to modify or adjust different profile information, such as for particular applications 110 and/or for different types of workloads. For example, different profiles within the evaluation datastore 308 may be used to specify particular parameters for a given application 110 associated with a client based on client needs, such as a desire for reduced latency. Additionally, the profiles may correspond to certain types of workloads, such as workloads that require high throughout or resiliency, among various other desirable parameters. Various embodiments may also include a vendor determined or established set of policies and/or profiles, which the CSPs 312 may elect to use or not. For example, a provider or producer of the DPU 118 may preload a set of policies for different types or workloads and/or certain routing policies. The CSPs 312 may then elect to default or otherwise implement the preloaded policies, to create their own policies, and/or to modify the preloaded policies, among other options. Similarly, the provider may also provide a set of profiles for different types of workflows that the CSPs 312 may choose to leverage, use, modify, and/or combinations thereof. Systems and methods may evaluate the incoming message 302, apply one or more policies associated with different profiles and/or the like, and then modify different parameters of the connection, for example, by using the modify and send engine 210.

In at least one embodiment, the DPU 118 may modify or otherwise change parameters of the message 302 and then transmit a modified message 316 to the resource 304 to establish a connection with the application 110. Additionally, as noted herein with examples where connections are created based on quality monitoring, a message to establish a connection with the resource 304 may be generated by the DPU 118 without the initial message 302. For example, the DPU 118 may monitor traffic along one or more connections, determine that the connection has a quality metric below a threshold, and then establish one or more additional connections. The one or more additional connections may use the same protocol as the existing connections and/or may use different protocols, which may be determined based on the policy used to establish the one or more additional connections. As noted herein, the underlying connection parameters may be unknown to the application 110 and/or the client, and therefore, the CSP can decide what type of connection to establish in order to satisfy different quality metrics. Once the connection is established, the application 110 may begin transmitting data for use by the resource 304. For example, data packets 318 may be transmitted to the DPU 118, such as along the data path, and the virtualization engine 206 may be used to intercept the data packets 318 prior to passing the data packets 318 along to the resource 304. The data packets 318 may be evaluated to determine they are associated with a given policy or profile and then may be modified for transmission using one or more selected connection parameters, which may be parameters selected according to the policies extracted from the policy datastore 310. In at least one embodiment, a header 320 is added to the data package 318 to include information associated with the selected communication parameters, and thereafter, the data packet 318 and the header 320 may be transmitted to the resource 308. Accordingly, systems and methods may be implemented by the DPU 118 to intercept and modify various network communication messages and streams based, at least, on programmable, modifiable policies provided by the CSP 312 and/or the developer of the DPU 118.

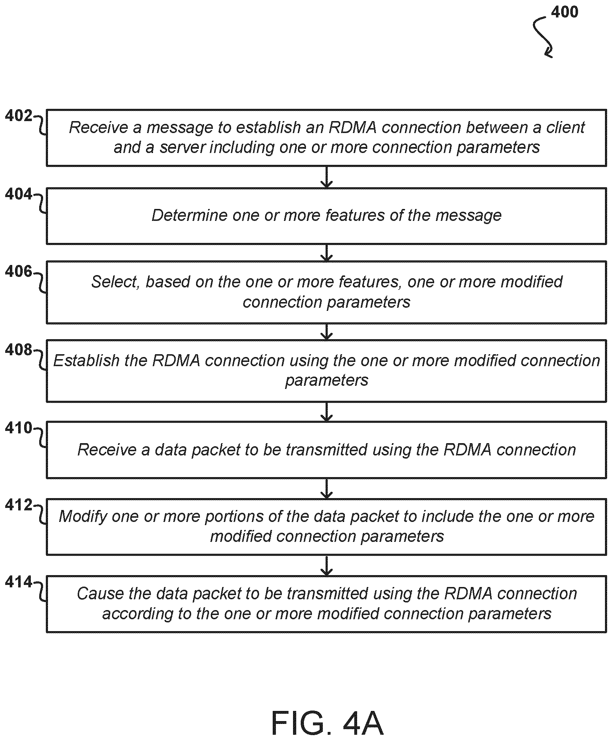

FIG. 4A illustrates an example process 400 that can be used to establish a network connection in accordance with various embodiments. It should be understood that for this and other processes presented herein that there may be additional, fewer, or alternative operations performed in similar or alternative orders, or at least partially in parallel, within the scope of the various embodiments unless otherwise specifically stated. Further, while this example refers to ports, it should be understood that various other components may also use such a process within the scope of various embodiments. In this example, a message is received to establish an RDMA connection between a client and a server 402. The message may include one or more connection parameters, such as parameters associated with different routing configurations, among other options. The message may originate from one or more VMs or applications executing on a computing resource and the connection may be established to another computing resource. As noted herein, while various embodiments may be described with respect to establishing connections responsive to receiving a message from a client, systems and methods may also be implemented to determine to establish a new connection based on different policies, such as those evaluating network connection quality and health, without a message from a client. Moreover, the establishment of the RDMA connection is also provided by way of non-limiting example, as noted herein, because systems and methods may enable a variety of different underlying protocols to be used to establish connections. One or more features of the message may be determined 404. For example, a hint or other information may be extracted from the message to provide information associated with various features, such as a sender, a workload type, a desired communication parameter, an associated communication policy, and/or the like. Furthermore, in at least one embodiment, the one or more features may be provided out of band and may be included as a separate message.

Systems and methods may include a set of updateable, programmable connection parameters that may be established by CSPs and/or NIC vendors. For example, a datastore may be established to select different connection parameters based on certain senders or workflows, among other options. Furthermore, the datastore may also be used to identify and execute different policies for monitoring network connection quality and then, responsive to a quality evaluation, determine whether or not to adjust existing connection parameters and/or to establish new connections, among other options. The connection parameters may be associated with a variety of different configurable aspects of a network connection, including but not limited to routing policies. In at least one embodiment, one or more modified connection parameters may be selected based on the one or more features 406. For example, a particular sender may have a profile that defines different connection parameters. As another example, certain workload types may have certain connection parameters. The RDMA connection may then be established between the client and the server using the one or more modified connection parameters 408. As noted herein, the client may be unaware that the connection parameters have been modified because, on the client side, no changes may be necessary in order to send messages using the different connection parameters. That is, the client may continue to execute operations without regard to the modified connection parameters, which may be modified and managed by the CSPs according to their underlying hardware infrastructure.

A data packet may then be transmitted using the RDMA connection 410. In at least one embodiment, the data package may be intercepted, prior to transmission to the server, and modified to include the one or more modified connection parameters 412. For example, a multipath policy may be appended to the data package in the form of a header. The data packet may then be transmitted using the RDMA connection according to the one or more modified connection parameters 414. In this manner, the CSP may monitor and regulate flow on the network in accordance with their policies while providing services to clients without requiring clients to modify or otherwise change the interaction of their applications with the environment.

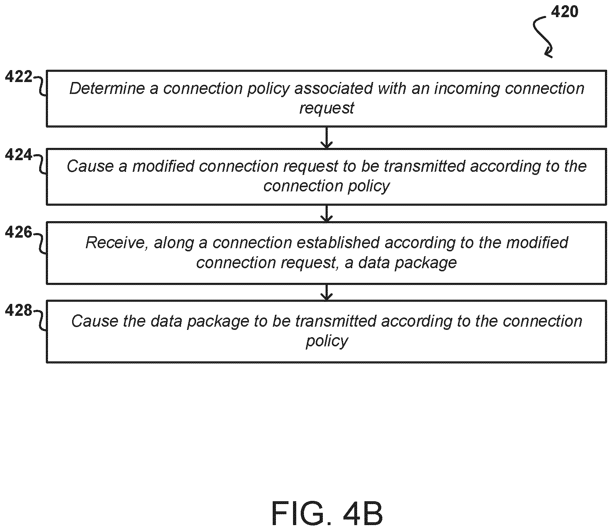

FIG. 4B illustrates an example process 420 to modify connection requests and data flows that can be used with embodiments of the present disclosure. In this example, a connection policy is determined for an incoming connection request 422. For example, the incoming connection request may be associated with a particular sender that has a stored profile (e.g., stored at a NIC and/or accessible to a NIC) to establish different connection parameters. As another example, the connection request may be generated based on execution of one or more policies for monitoring different connection parameters, among other options. For example, connections may be monitored for quality, such as against one or more metrics, and the request to establish a new connection may be responsive to a determination to form a new connection based on the policy. Additionally, in various embodiments, a hint may be extracted from the incoming connection request and/or information may be provided associated with the connection request. The policy may be selected from a datastore, which may be populated by a CSP associated with the NIC and/or may be a pre-stored policy provided with the NIC, among other options. Certain policies may be selected based on rules or other guidelines established by the CSP.

A modified connection request may be transmitted to a recipient using the selected connection policy 424. In at least one embodiment, the selected connection policy is different from an initial request. After the connection is established, a data package may be received for transmission along the connection 426. The data package may be intercepted, prior to transmission to the recipient, and then modified such that the data package is transmitted according to the connection policy 428. In this manner, connection policies may be managed and dynamically changed for facilitate different desired communication standards and operations.

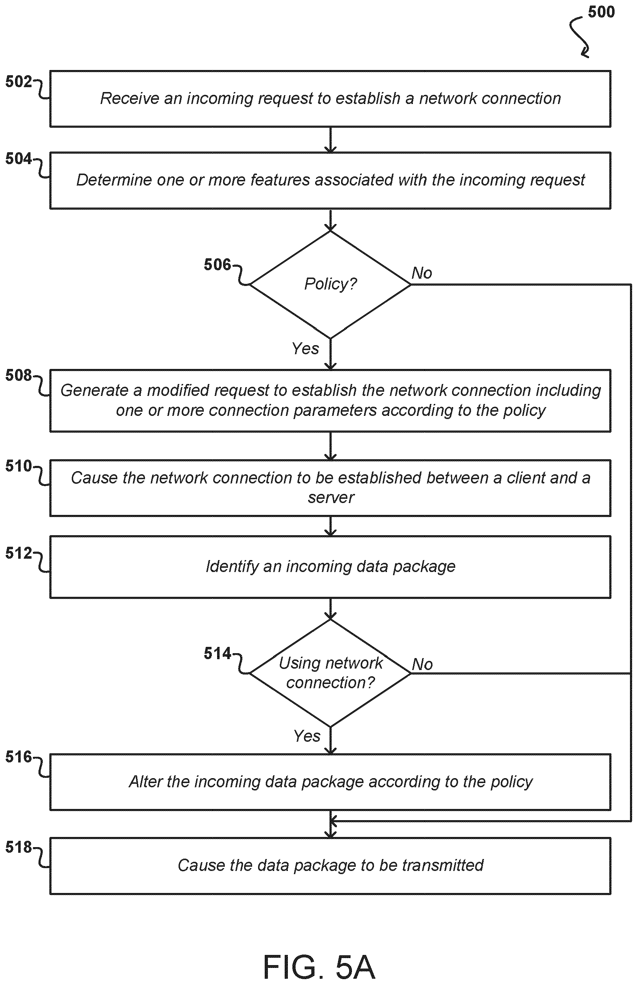

FIG. 5A illustrates an example process 500 that can be used to modify connection parameters and associated messages transparently from a sender. In this example, an incoming request to establish a network connection is received 502. The incoming request may be a request to establish an RDMA request from an application executing on one or more compute resources. One or more features associated with the request may be determined 504. The features may be associated with a sender of the request, a workload type, and/or the like. In at least one embodiment, feature information is determined from a hint within the request, such as within the header, or may be provided as a separate indication.

It may be determined whether or not a policy is present for the one or more features 506. For example, the features may be compared against a policy datastore to see if a specified policy has been created for the features, such as for a certain type of workload or a certain sender. If so, the a modified request may be generated to establish a network connection according to the policy 508, which may include modifying one or more connection parameters when compared to the initial request. A network connection may then be formed using the policy 510. In at least one embodiment, the requesting client may not know that the policy has been implemented, and therefore may transmit data over the network connection using parameters modified according to the policy. An incoming data package may be identified 512 and it may be determined whether or not the incoming data package is being transmitted using the network connection 514. If so, then the incoming data package may be altered according to the policy, such as to change one or more network connection parameters 516, and then the data package may be transmitted along the network connection after modification 518. In this manner, policy information may be used to modify different connection parameters independent from a sender of the data.

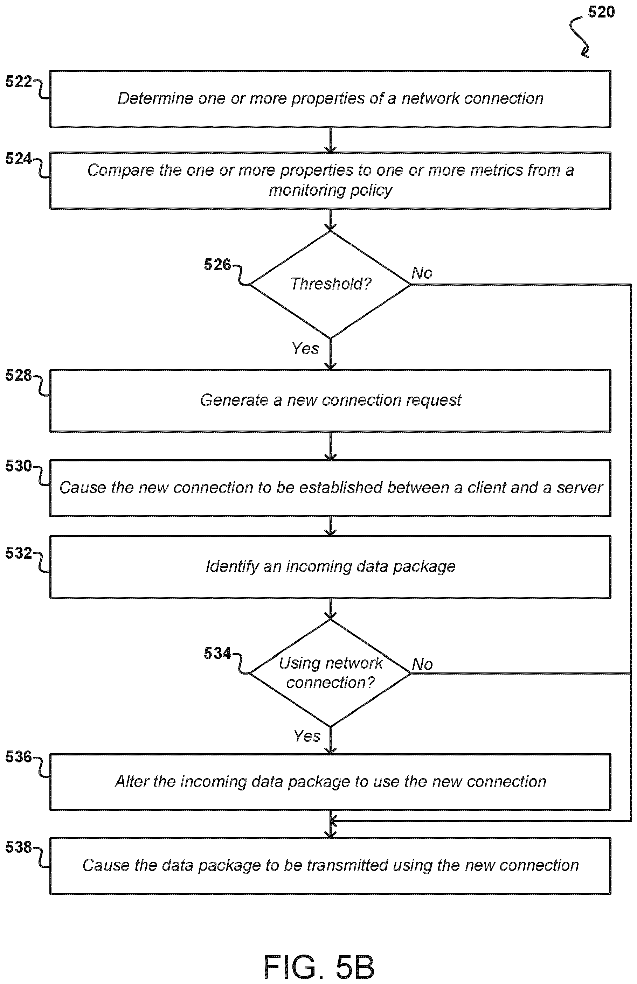

FIG. 5B illustrates an example process 520 that can be used to modify connection parameters and associated messages transparently from a sender. In this example, one or more properties of a network connection are determined 522. The one or more properties may be associated with one or more monitoring policies, for example, to evaluate health and/or quality of a network connection, among other options. The network connection may be associated with a variety of different underlying network protocols. In at least one embodiment, the one or more properties may be compared to one or more metrics associated with a monitoring policy 524. For example, the one or more properties may be compared to different quality metrics to determine whether or not traffic is efficiently being transmitted along the connections. Different monitoring policies may be established for different type of network traffic and/or for different clients, among other options. As a result, a "high quality" connection for a certain type of traffic may be different from a "high quality" connection or a different type of traffic. The comparison between the properties and metrics may be evaluated against a threshold and it may be determined whether the one or more properties are below a quality threshold 526. If so, then a new connection request may be generated 528. The new connection request may also be associated with a request to end or otherwise terminate an existing connection after the new connection is established. The new connection may be established between a client and a server 530 and then identified incoming data packages 532 may be evaluated to determine whether they are using the existing network connection 534. If so, the incoming data package may be altered to use the new connection 536 and then the data package may be transmitted along the new connection 538. As noted herein, in at least one connection, the older network connection may then be terminated in certain embodiments, or traffic may be divided along the different connections, among various other options. In this manner, systems and methods may implement monitoring policies to generate new connections that are transparent from the client such that the client may be unaware the new connection has been established, and moreover, may not have to implement any client-side changes to use the new connection.

As discussed, aspects of various approaches presented herein can be lightweight enough to execute on a device such as a client device, such as a personal computer or gaming console, in real time. Such processing can be performed on, or for, content that is generated on, or received by, that client device or received from an external source, such as streaming data or other content received over at least one network. In some instances, the processing and/or determination of this content may be performed by one of these other devices, systems, or entities, then provided to the client device (or another such recipient) for presentation or another such use.

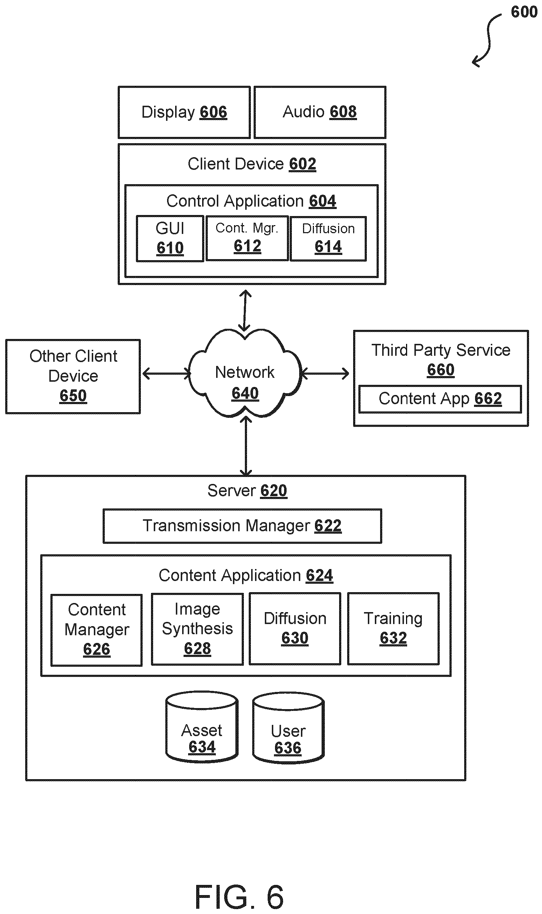

As an example, FIG. 6 illustrates an example network configuration 600 that can be used to provide, generate, modify, encode, process, and/or transmit image data or other such content. In at least one embodiment, a client device 602 can generate or receive data for a session using components of a control application 604 on client device 602 and data stored locally on that client device. In at least one embodiment, a content application 624 executing on a server 620 (e.g., a cloud server or edge server) may initiate a session associated with at least one client device 602, as may utilize a session manager and user data stored in a user database 636, and can cause content such as one or more digital assets (e.g., object representations) from an asset repository 634 to be determined by a content manager 626. A content manager 626 may work with an image synthesis module 628 to generate or synthesize new objects, digital assets, or other such content to be provided for presentation via the client device 602. In at least one embodiment, this image synthesis module 628 can use one or more neural networks, or machine learning models, which can be trained or updated using a training module 632 or system that is on, or in communication with, the server 620. This can include training and/or using a diffusion model 630 to generate content tiles that can be used by an image synthesis module 628, for example, to apply a non-repeating texture to a region of an environment for which image or video data is to be presented via a client device 602. At least a portion of the generated content may be transmitted to the client device 602 using an appropriate transmission manager 622 to send by download, streaming, or another such transmission channel. An encoder may be used to encode and/or compress at least some of this data before transmitting to the client device 602. In at least one embodiment, the client device 602 receiving such content can provide this content to a corresponding control application 604, which may also or alternatively include a graphical user interface 610, content manager 612, and image synthesis or diffusion module 614 for use in providing, synthesizing, modifying, or using content for presentation (or other purposes) on or by the client device 602. A decoder may also be used to decode data received over the network 640 for presentation via client device 602, such as image or video content through a display 606 and audio, such as sounds and music, through at least one audio playback device 608, such as speakers or headphones. In at least one embodiment, at least some of this content may already be stored on, rendered on, or accessible to client device 602 such that transmission over network 640 is not required for at least that portion of content, such as where that content may have been previously downloaded or stored locally on a hard drive or optical disk. In at least one embodiment, a transmission mechanism such as data streaming can be used to transfer this content from server 620, or user database 636, to client device 602. In at least one embodiment, at least a portion of this content can be obtained, enhanced, and/or streamed from another source, such as a third party service 660 or other client device 650, that may also include a content application 662 for generating, enhancing, or providing content. In at least one embodiment, portions of this functionality can be performed using multiple computing devices, or multiple processors within one or more computing devices, such as may include a combination of CPUs and GPUs.

In this example, these client devices can include any appropriate computing devices, as may include a desktop computer, notebook computer, set-top box, streaming device, gaming console, smartphone, tablet computer, VR headset, AR goggles, wearable computer, or a smart television. Each client device can submit a request across at least one wired or wireless network, as may include the Internet, an Ethernet, a local area network (LAN), or a cellular network, among other such options. In this example, these requests can be submitted to an address associated with a cloud provider, who may operate or control one or more electronic resources in a cloud provider environment, such as may include a data center or server farm. In at least one embodiment, the request may be received or processed by at least one edge server, that sits on a network edge and is outside at least one security layer associated with the cloud provider environment. In this way, latency can be reduced by enabling the client devices to interact with servers that are in closer proximity, while also improving security of resources in the cloud provider environment.

In at least one embodiment, such a system can be used for performing graphical rendering operations. In other embodiments, such a system can be used for other purposes, such as for providing image or video content to test or validate autonomous machine applications, or for performing deep learning operations. In at least one embodiment, such a system can be implemented using an edge device, or may incorporate one or more Virtual Machines (VMs). In at least one embodiment, such a system can be implemented at least partially in a data center or at least partially using cloud computing resources.

### DATA CENTER

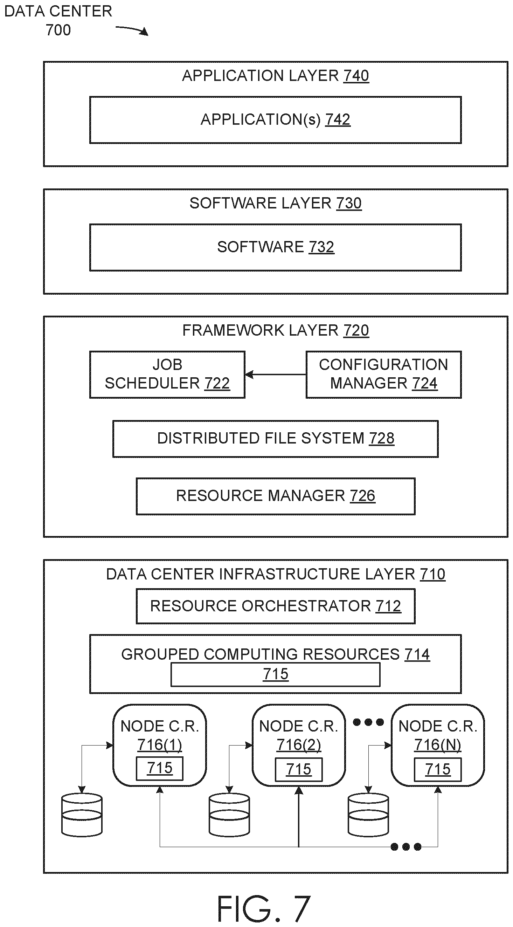

FIG. 7 illustrates an example data center 700, in which at least one embodiment may be used. In at least one embodiment, data center 700 includes a data center infrastructure layer 710, a framework layer 720, a software layer 730, and an application layer 740.

In at least one embodiment, as shown in FIG. 7, data center infrastructure layer 710 may include a resource orchestrator 712, grouped computing resources 714, and node computing resources ("node C.R.s") 716(1)-716(N), where "N" represents any whole, positive integer. In at least one embodiment, node C.R.s 716(1)-716(N) may include, but are not limited to, any number of central processing units ("CPUs") or other processors (including accelerators, field programmable gate arrays (FPGAs), graphics processors, etc.), memory devices (e.g., dynamic read-only memory), storage devices (e.g., solid state or disk drives), network input/output ("NW I/O") devices, network switches, virtual machines ("VMs"), power modules, and cooling modules, etc. In at least one embodiment, one or more node C.R.s from among node C.R.s 716(1)-716(N) may be a server having one or more of above-mentioned computing resources.

In at least one embodiment, grouped computing resources 714 may include separate groupings of node C.R.s housed within one or more racks (not shown), or many racks housed in data centers at various geographical locations (also not shown). Separate groupings of node C.R.s within grouped computing resources 714 may include grouped compute, network, memory or storage resources that may be configured or allocated to support one or more workloads. In at least one embodiment, several node C.R.s including CPUs or processors may grouped within one or more racks to provide compute resources to support one or more workloads. In at least one embodiment, one or more racks may also include any number of power modules, cooling modules, and network switches, in any combination.

In at least one embodiment, resource orchestrator 712 may configure or otherwise control one or more node C.R.s 716(1)-716(N) and/or grouped computing resources 714. In at least one embodiment, resource orchestrator 712 may include a software design infrastructure ("SDI") management entity for data center 700. In at least one embodiment, resource orchestrator may include hardware, software or some combination thereof.

In at least one embodiment, as shown in FIG. 7, framework layer 720 includes a job scheduler 722, a configuration manager 724, a resource manager 726 and a distributed file system 728. In at least one embodiment, framework layer 720 may include a framework to support software 732 of software layer 730 and/or one or more application(s) 742 of application layer 740. In at least one embodiment, software 732 or application(s) 742 may respectively include web-based service software or applications, such as those provided by Amazon Web Services, Google Cloud and Microsoft Azure. In at least one embodiment, framework layer 720 may be, but is not limited to, a type of free and open-source software web application framework such as Apache Spark^{™} (hereinafter "Spark") that may use distributed file system 728 for large-scale data processing (e.g., "big data"). In at least one embodiment, job scheduler 722 may include a Spark driver to facilitate scheduling of workloads supported by various layers of data center 700. In at least one embodiment, configuration manager 724 may be capable of configuring different layers such as software layer 730 and framework layer 720 including Spark and distributed file system 728 for supporting large-scale data processing. In at least one embodiment, resource manager 726 may be capable of managing clustered or grouped computing resources mapped to or allocated for support of distributed file system 728 and job scheduler 722. In at least one embodiment, clustered or grouped computing resources may include grouped computing resource 814 at data center infrastructure layer 710. In at least one embodiment, resource manager 726 may coordinate with resource orchestrator 712 to manage these mapped or allocated computing resources.

In at least one embodiment, software 732 included in software layer 730 may include software used by at least portions of node C.R.s 716(1)-716(N), grouped computing resources 714, and/or distributed file system 728 of framework layer 720. The one or more types of software may include, but are not limited to, Internet web page search software, e-mail virus scan software, database software, and streaming video content software.

In at least one embodiment, application(s) 742 included in application layer 740 may include one or more types of applications used by at least portions of node C.R.s 716(1)-716(N), grouped computing resources 714, and/or distributed file system 728 of framework layer 720. One or more types of applications may include, but are not limited to, any number of a genomics application, a cognitive compute, and a machine learning application, including training or inferencing software, machine learning framework software (e.g., PyTorch, TensorFlow, Caffe, etc.) or other machine learning applications used in conjunction with one or more embodiments.

In at least one embodiment, any of configuration manager 724, resource manager 726, and resource orchestrator 712 may implement any number and type of self-modifying actions based on any amount and type of data acquired in any technically feasible fashion. In at least one embodiment, self-modifying actions may relieve a data center operator of data center 700 from making possibly bad configuration decisions and possibly avoiding underused and/or poor performing portions of a data center.

In at least one embodiment, data center 700 may include tools, services, software or other resources to train one or more machine learning models or predict or infer information using one or more machine learning models according to one or more embodiments described herein. For example, in at least one embodiment, a machine learning model may be trained by calculating weight parameters according to a neural network architecture using software and computing resources described above with respect to data center 700. In at least one embodiment, trained machine learning models corresponding to one or more neural networks may be used to infer or predict information using resources described above with respect to data center 700 by using weight parameters calculated through one or more training techniques described herein.

In at least one embodiment, data center may use CPUs, application-specific integrated circuits (ASICs), GPUs, FPGAs, or other hardware to perform training and/or inferencing using above-described resources. Moreover, one or more software and/or hardware resources described above may be configured as a service to allow users to train or performing inferencing of information, such as image recognition, speech recognition, or other artificial intelligence services.

Inference and/or training logic 715 are used to perform inferencing and/or training operations associated with one or more embodiments. In at least one embodiment, inference and/or training logic 715 may be used in system FIG. 7 for inferencing or predicting operations based, at least in part, on weight parameters calculated using neural network training operations, neural network functions and/or architectures, or neural network use cases described herein.

Such components can be used for establishing and/or monitoring network connections.

### COMPUTER SYSTEMS

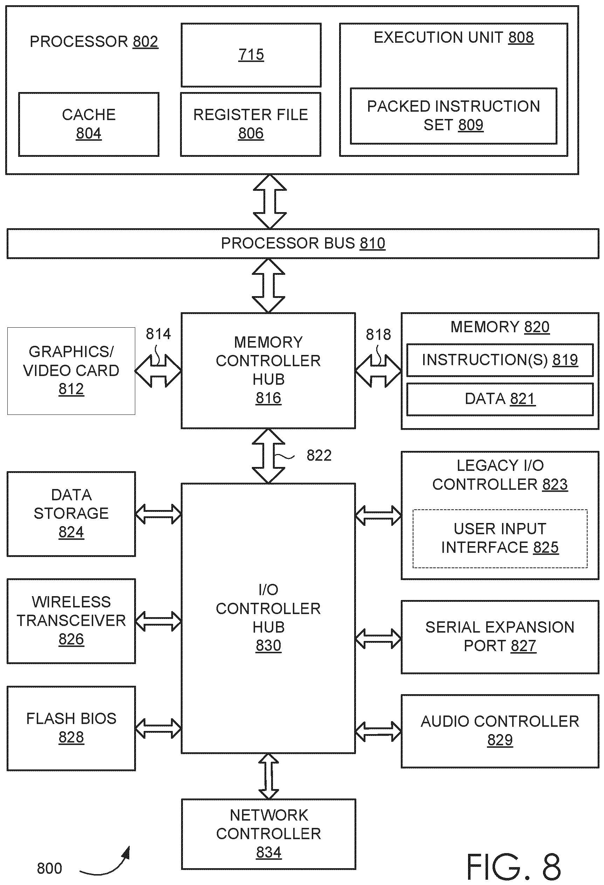

FIG. 8 is a block diagram illustrating an exemplary computer system, which may be a system with interconnected devices and components, a system-on-a-chip (SOC) or some combination thereof 800 formed with a processor that may include execution units to execute an instruction, according to at least one embodiment. In at least one embodiment, computer system 800 may include, without limitation, a component, such as a processor 802 to employ execution units including logic to perform algorithms for process data, in accordance with present disclosure, such as in embodiment described herein. In at least one embodiment, computer system 800 may include processors, such as PENTIUM^{®} Processor family, Xeon^{™}, Itanium^{®}, XScale^{™} and/or StrongARM^{™}, Intel^{®} Core^{™}, or Intel^{®} Nervana^{™} microprocessors available from Intel Corporation of Santa Clara, California, although other systems (including PCs having other microprocessors, engineering workstations, set-top boxes and like) may also be used. In at least one embodiment, computer system 800 may execute a version of WINDOWS' operating system available from Microsoft Corporation of Redmond, Wash., although other operating systems (UNIX and Linux for example), embedded software, and/or graphical user interfaces, may also be used.

Embodiments may be used in other devices such as handheld devices and embedded applications. Some examples of handheld devices include cellular phones, Internet Protocol devices, digital cameras, personal digital assistants ("PDAs"), and handheld PCs. In at least one embodiment, embedded applications may include a microcontroller, a digital signal processor ("DSP"), system on a chip, network computers ("NetPCs"), set-top boxes, network hubs, wide area network ("WAN") switches, or any other system that may perform one or more instructions in accordance with at least one embodiment.

In at least one embodiment, computer system 800 may include, without limitation, processor 802 that may include, without limitation, one or more execution units 808 to perform machine learning model training and/or inferencing according to techniques described herein. In at least one embodiment, computer system 800 is a single processor desktop or server system, but in another embodiment computer system 800 may be a multiprocessor system. In at least one embodiment, processor 802 may include, without limitation, a complex instruction set computer ("CISC") microprocessor, a reduced instruction set computing ("RISC") microprocessor, a very long instruction word ("VLIW") microprocessor, a processor implementing a combination of instruction sets, or any other processor device, such as a digital signal processor, for example. In at least one embodiment, processor 802 may be coupled to a processor bus 810 that may transmit data signals between processor 802 and other components in computer system 800.

In at least one embodiment, processor 802 may include, without limitation, a Level 1 ("L1") internal cache memory ("cache") 804. In at least one embodiment, processor 802 may have a single internal cache or multiple levels of internal cache. In at least one embodiment, cache memory may reside external to processor 802. Other embodiments may also include a combination of both internal and external caches depending on particular implementation and needs. In at least one embodiment, register file 806 may store different types of data in various registers including, without limitation, integer registers, floating point registers, status registers, and instruction pointer register.

In at least one embodiment, execution unit 808, including, without limitation, logic to perform integer and floating point operations, also resides in processor 802. In at least one embodiment, processor 802 may also include a microcode ("ucode") read only memory ("ROM") that stores microcode for certain macro instructions. In at least one embodiment, execution unit 808 may include logic to handle a packed instruction set 809. In at least one embodiment, by including packed instruction set 809 in an instruction set of a general-purpose processor 802, along with associated circuitry to execute instructions, operations used by many multimedia applications may be performed using packed data in a general-purpose processor 802. In one or more embodiments, many multimedia applications may be accelerated and executed more efficiently by using full width of a processor's data bus for performing operations on packed data, which may eliminate need to transfer smaller units of data across processor's data bus to perform one or more operations one data element at a time.

In at least one embodiment, execution unit 808 may also be used in microcontrollers, embedded processors, graphics devices, DSPs, and other types of logic circuits. In at least one embodiment, computer system 800 may include, without limitation, a memory 820. In at least one embodiment, memory 820 may be implemented as a Dynamic Random Access Memory ("DRAM") device, a Static Random Access Memory ("SRAM") device, flash memory device, or other memory device. In at least one embodiment, memory 820 may store instruction(s) 819 and/or data 821 represented by data signals that may be executed by processor 802.

In at least one embodiment, system logic chip may be coupled to processor bus 810 and memory 820. In at least one embodiment, system logic chip may include, without limitation, a memory controller hub ("MCH") 816, and processor 802 may communicate with MCH 816 via processor bus 810. In at least one embodiment, MCH 816 may provide a high bandwidth memory path 818 to memory 820 for instruction and data storage and for storage of graphics commands, data and textures. In at least one embodiment, MCH 816 may direct data signals between processor 802, memory 820, and other components in computer system 800 and to bridge data signals between processor bus 810, memory 820, and a system I/O 822. In at least one embodiment, system logic chip may provide a graphics port for coupling to a graphics controller. In at least one embodiment, MCH 816 may be coupled to memory 820 through a high bandwidth memory path 818 and graphics/video card 812 may be coupled to MCH 816 through an Accelerated Graphics Port ("AGP") interconnect 814.

In at least one embodiment, computer system 800 may use system I/O 822 that is a proprietary hub interface bus to couple MCH 816 to I/O controller hub ("ICH") 830. In at least one embodiment, ICH 830 may provide direct connections to some I/O devices via a local I/O bus. In at least one embodiment, local I/O bus may include, without limitation, a high-speed I/O bus for connecting peripherals to memory 820, chipset, and processor 802. Examples may include, without limitation, an audio controller 829, a firmware hub ("flash BIOS") 828, a wireless transceiver 826, a data storage 824, a legacy I/O controller 823 containing user input and keyboard interface(s) 825, a serial expansion port 827, such as Universal Serial Bus ("USB"), and a network controller 834. Data storage 824 may comprise a hard disk drive, a floppy disk drive, a CD-ROM device, a flash memory device, or other mass storage device.

In at least one embodiment, FIG. 8 illustrates a system, which includes interconnected hardware devices or "chips", whereas in other embodiments, FIG. 8 may illustrate an exemplary System on a Chip ("SoC"). In at least one embodiment, devices may be interconnected with proprietary interconnects, standardized interconnects (e.g., PCIe) or some combination thereof. In at least one embodiment, one or more components of computer system 800 are interconnected using compute express link (CXL) interconnects.

Inference and/or training logic 715 are used to perform inferencing and/or training operations associated with one or more embodiments. In at least one embodiment, inference and/or training logic 715 may be used in system FIG. 8 for inferencing or predicting operations based, at least in part, on weight parameters calculated using neural network training operations, neural network functions and/or architectures, or neural network use cases described herein.

Such components can be used for establishing and/or monitoring network connections.

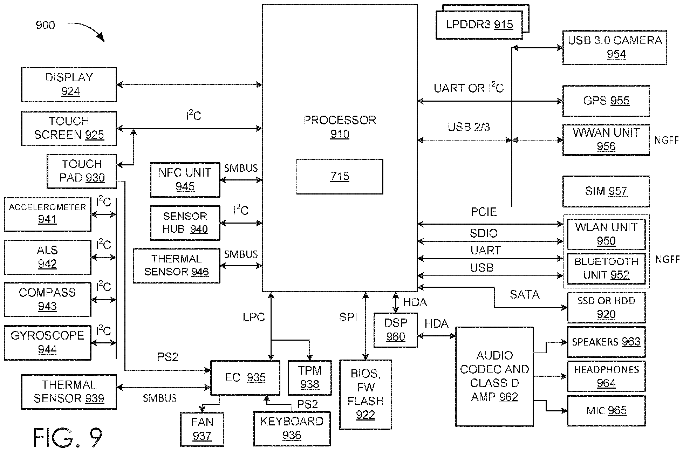

FIG. 9 is a block diagram illustrating an electronic device 900 for utilizing a processor 910, according to at least one embodiment. In at least one embodiment, electronic device 900 may be, for example and without limitation, a notebook, a tower server, a rack server, a blade server, a laptop, a desktop, a tablet, a mobile device, a phone, an embedded computer, or any other suitable electronic device.

In at least one embodiment, electronic device 900 may include, without limitation, processor 910 communicatively coupled to any suitable number or kind of components, peripherals, modules, or devices. In at least one embodiment, processor 910 coupled using a bus or interface, such as a 1°C bus, a System Management Bus ("SMBus"), a Low Pin Count (LPC) bus, a Serial Peripheral Interface ("SPI"), a High Definition Audio ("HDA") bus, a Serial Advance Technology Attachment ("SATA") bus, a Universal Serial Bus ("USB") (versions 1, 2, 3), or a Universal Asynchronous Receiver/Transmitter ("UART") bus. In at least one embodiment, FIG. 9 illustrates a system, which includes interconnected hardware devices or "chips", whereas in other embodiments, FIG. 9 may illustrate an exemplary System on a Chip ("SoC"). In at least one embodiment, devices illustrated in FIG. 9 may be interconnected with proprietary interconnects, standardized interconnects (e.g., PCIe) or some combination thereof. In at least one embodiment, one or more components of FIG. 9 are interconnected using compute express link (CXL) interconnects.

In at least one embodiment, FIG 9 may include a display 924, a touch screen 925, a touch pad 930, a Near Field Communications unit ("NFC") 945, a sensor hub 940, a thermal sensor 946, an Express Chipset ("EC") 935, a Trusted Platform Module ("TPM") 938, BIOS/firmware/flash memory ("BIOS, FW Flash") 922, a DSP 960, a drive 920 such as a Solid State Disk ("SSD") or a Hard Disk Drive ("HDD"), a wireless local area network unit ("WLAN") 950, a Bluetooth unit 952, a Wireless Wide Area Network unit ("WWAN") 956, a Global Positioning System (GPS) 955, a camera ("USB 3.0 camera") 954 such as a USB 3.0 camera, and/or a Low Power Double Data Rate ("LPDDR") memory unit ("LPDDR3") 915 implemented in, for example, LPDDR3 standard. These components may each be implemented in any suitable manner.

In at least one embodiment, other components may be communicatively coupled to processor 910 through components discussed above. In at least one embodiment, an accelerometer 941, Ambient Light Sensor ("ALS") 942, compass 943, and a gyroscope 944 may be communicatively coupled to sensor hub 940. In at least one embodiment, thermal sensor 939, a fan 937, a keyboard 936, and a touch pad 930 may be communicatively coupled to EC 935. In at least one embodiment, speakers 963, headphones 964, and microphone ("mic") 965 may be communicatively coupled to an audio unit ("audio codec and class d amp") 962, which may in turn be communicatively coupled to DSP 960. In at least one embodiment, audio unit 964 may include, for example and without limitation, an audio coder/decoder ("codec") and a class D amplifier. In at least one embodiment, SIM card ("SIM") 957 may be communicatively coupled to WWAN unit 956. In at least one embodiment, components such as WLAN unit 950 and Bluetooth unit 952, as well as WWAN unit 956 may be implemented in a Next Generation Form Factor ("NGFF").

Inference and/or training logic 715 are used to perform inferencing and/or training operations associated with one or more embodiments. In at least one embodiment, inference and/or training logic 715 may be used in system FIG. 9 for inferencing or predicting operations based, at least in part, on weight parameters calculated using neural network training operations, neural network functions and/or architectures, or neural network use cases described herein.

Such components can be used for establishing and/or monitoring network connections.

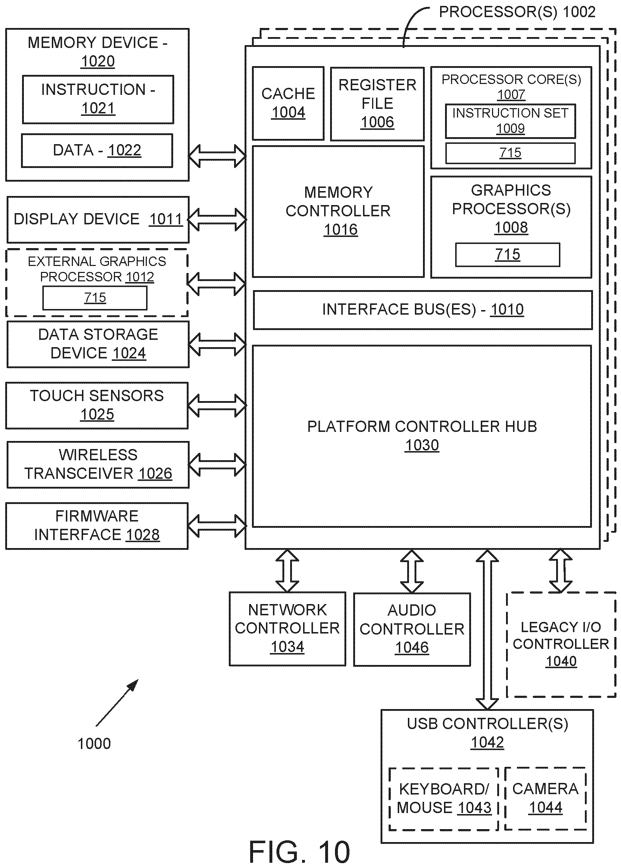

FIG. 10 is a block diagram of a processing system, according to at least one embodiment. In at least one embodiment, system 1000 includes one or more processor(s) 1002 and one or more graphics processor(s) 1008, and may be a single processor desktop system, a multiprocessor workstation system, or a server system having a large number of processor(s) 1002 or processor core(s) 1007. In at least one embodiment, system 1000 is a processing platform incorporated within a system-on-a-chip (SoC) integrated circuit for use in mobile, handheld, or embedded devices.

In at least one embodiment, system 1000 can include, or be incorporated within a server-based gaming platform, a game console, including a game and media console, a mobile gaming console, a handheld game console, or an online game console. In at least one embodiment, system 1000 is a mobile phone, smart phone, tablet computing device or mobile Internet device. In at least one embodiment, processing system 1000 can also include, couple with, or be integrated within a wearable device, such as a smart watch wearable device, smart eyewear device, augmented reality device, or virtual reality device. In at least one embodiment, processing system 1000 is a television or set top box device having one or more processor(s) 1002 and a graphical interface generated by one or more graphics processor(s) 1008.

In at least one embodiment, one or more processor(s) 1002 each include one or more processor core(s) 1007 to process instructions which, when executed, perform operations for system and user software. In at least one embodiment, each of one or more processor core(s) 1007 is configured to process a specific instruction set 1009. In at least one embodiment, instruction set 1009 may facilitate Complex Instruction Set Computing (CISC), Reduced Instruction Set Computing (RISC), or computing via a Very Long Instruction Word (VLIW). In at least one embodiment, processor core(s) 1007 may each process a different instruction set 1009, which may include instructions to facilitate emulation of other instruction sets. In at least one embodiment, processor core(s) 1007 may also include other processing devices, such a Digital Signal Processor (DSP).

In at least one embodiment, processor(s) 1002 includes cache memory 1004. In at least one embodiment, processor(s) 1002 can have a single internal cache or multiple levels of internal cache. In at least one embodiment, cache memory is shared among various components of processor(s) 1002. In at least one embodiment, processor(s) 1002 also uses an external cache (e.g., a Level-3 (L3) cache or Last Level Cache (LLC)) (not shown), which may be shared among processor core(s) 1007 using known cache coherency techniques. In at least one embodiment, register file 1006 is additionally included in processor(s) 1002 which may include different types of registers for storing different types of data (e.g., integer registers, floating point registers, status registers, and an instruction pointer register). In at least one embodiment, register file 1006 may include general-purpose registers or other registers.

In at least one embodiment, one or more processor(s) 1002 are coupled with one or more interface bus(es) 1010 to transmit communication signals such as address, data, or control signals between processor(s) 1002 and other components in system 1000. In at least one embodiment, interface bus(es) 1010, in one embodiment, can be a processor bus, such as a version of a Direct Media Interface (DMI) bus. In at least one embodiment, interface bus(es) 1010 is not limited to a DMI bus, and may include one or more Peripheral Component Interconnect buses (e.g., PCI, PCI Express), memory busses, or other types of interface busses. In at least one embodiment processor(s) 1002 include an integrated memory controller 1016 and a platform controller hub 1030. In at least one embodiment, memory controller 1016 facilitates communication between a memory device and other components of system 1000, while platform controller hub (PCH) 1030 provides connections to I/O devices via a local I/O bus.

In at least one embodiment, memory device 1020 can be a dynamic random access memory (DRAM) device, a static random access memory (SRAM) device, flash memory device, phase-change memory device, or some other memory device having suitable performance to serve as process memory. In at least one embodiment memory device 1020 can operate as system memory for system 1000, to store data 1022 and instruction 1021 for use when one or more processor(s) 1002 executes an application or process. In at least one embodiment, memory controller 1016 also couples with an optional external graphics processor 1012, which may communicate with one or more graphics processor(s) 1008 in processor(s) 1002 to perform graphics and media operations. In at least one embodiment, a display device 1011 can connect to processor(s) 1002. In at least one embodiment display device 1011 can include one or more of an internal display device, as in a mobile electronic device or a laptop device or an external display device attached via a display interface (e.g., DisplayPort, etc.). In at least one embodiment, display device 1011 can include a head mounted display (HMD) such as a stereoscopic display device for use in virtual reality (VR) applications or augmented reality (AR) applications.

In at least one embodiment, platform controller hub 1030 enables peripherals to connect to memory device 1020 and processor(s) 1002 via a high-speed I/O bus. In at least one embodiment, I/O peripherals include, but are not limited to, an audio controller 1046, a network controller 1034, a firmware interface 1028, a wireless transceiver 1026, touch sensors 1025, a data storage device 1024 (e.g., hard disk drive, flash memory, etc.). In at least one embodiment, data storage device 1024 can connect via a storage interface (e.g., SATA) or via a peripheral bus, such as a Peripheral Component Interconnect bus (e.g., PCI, PCI Express). In at least one embodiment, touch sensors 1025 can include touch screen sensors, pressure sensors, or fingerprint sensors. In at least one embodiment, wireless transceiver 1026 can be a Wi-Fi transceiver, a Bluetooth transceiver, or a mobile network transceiver such as a 3G, 4G, or Long Term Evolution (LTE) transceiver. In at least one embodiment, firmware interface 1028 enables communication with system firmware, and can be, for example, a unified extensible firmware interface (UEFI). In at least one embodiment, network controller 1034 can enable a network connection to a wired network. In at least one embodiment, a high-performance network controller (not shown) couples with interface bus(es) 1010. In at least one embodiment, audio controller 1046 is a multi-channel high definition audio controller. In at least one embodiment, system 1000 includes an optional legacy I/O controller 1040 for coupling legacy (e.g., Personal System 2 (PS/2)) devices to system. In at least one embodiment, platform controller hub 1030 can also connect to one or more Universal Serial Bus (USB) controller(s) 1042 connect input devices, such as keyboard and mouse 1043 combinations, a camera 1044, or other USB input devices.

In at least one embodiment, an instance of memory controller 1016 and platform controller hub 1030 may be integrated into a discreet external graphics processor, such as external graphics processor 1012. In at least one embodiment, platform controller hub 1030 and/or memory controller 1016 may be external to one or more processor(s) 1002. For example, in at least one embodiment, system 1000 can include an external memory controller 1016 and platform controller hub 1030, which may be configured as a memory controller hub and peripheral controller hub within a system chipset that is in communication with processor(s) 1002.

Inference and/or training logic 715 are used to perform inferencing and/or training operations associated with one or more embodiments. In at least one embodiment portions or all of inference and/or training logic 715 may be incorporated into graphics processor(s) 1008. For example, in at least one embodiment, training and/or inferencing techniques described herein may use one or more of ALUs embodied in a graphics processor. In at least one embodiment, weight parameters may be stored in on-chip or off-chip memory and/or registers (shown or not shown) that configure ALUs of a graphics processor to perform one or more machine learning algorithms, neural network architectures, use cases, or training techniques described herein.

Such components can be used for establishing and/or monitoring network connections.

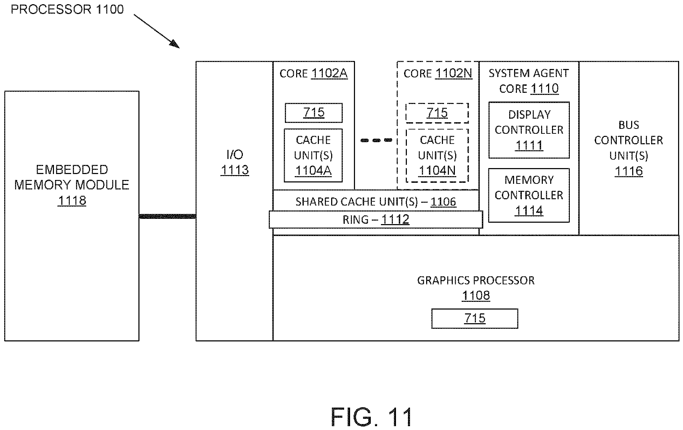

FIG. 11 is a block diagram of a processor 1100 having one or more processor core(s) 1102A-1102N, an integrated memory controller 1114, and an integrated graphics processor 1108, according to at least one embodiment. In at least one embodiment, processor 1100 can include additional cores up to and including additional core 1102N represented by dashed lined boxes. In at least one embodiment, each of processor core(s) 1102A-1102N includes one or more internal cache unit(s) 1104A-1104N. In at least one embodiment, each processor core also has access to one or more shared cached unit(s) 1106.

In at least one embodiment, internal cache unit(s) 1104A-1104N and shared cache unit(s) 1106 represent a cache memory hierarchy within processor 1100. In at least one embodiment, cache unit(s) 1104A-1104N may include at least one level of instruction and data cache within each processor core and one or more levels of shared mid-level cache, such as a Level 2 (L2), Level 3 (L3), Level 4 (L4), or other levels of cache, where a highest level of cache before external memory is classified as an LLC. In at least one embodiment, cache coherency logic maintains coherency between various cache unit(s) 1106 and 1104A-1104N.

In at least one embodiment, processor 1100 may also include a set of one or more bus controller unit(s) 1116 and a system agent core 1110. In at least one embodiment, one or more bus controller unit(s) 1116 manage a set of peripheral buses, such as one or more PCI or PCI express busses. In at least one embodiment, system agent core 1110 provides management functionality for various processor components. In at least one embodiment, system agent core 1110 includes one or more integrated memory controllers 1114 to manage access to various external memory devices (not shown).

In at least one embodiment, one or more of processor core(s) 1102A-1102N include support for simultaneous multi-threading. In at least one embodiment, system agent core 1110 includes components for coordinating and operating processor core(s) 1102A-1102N during multi-threaded processing. In at least one embodiment, system agent core 1110 may additionally include a power control unit (PCU), which includes logic and components to regulate one or more power states of processor core(s) 1102A-1102N and graphics processor 1108.

In at least one embodiment, processor 1100 additionally includes graphics processor 1108 to execute graphics processing operations. In at least one embodiment, graphics processor 1108 couples with shared cache unit(s) 1106, and system agent core 1110, including one or more integrated memory controllers 1114. In at least one embodiment, system agent core 1110 also includes a display controller 1111 to drive graphics processor output to one or more coupled displays. In at least one embodiment, display controller 1111 may also be a separate module coupled with graphics processor 1108 via at least one interconnect, or may be integrated within graphics processor 1108.

In at least one embodiment, a ring based interconnect unit 1112 is used to couple internal components of processor 1100. In at least one embodiment, an alternative interconnect unit may be used, such as a point-to-point interconnect, a switched interconnect, or other techniques. In at least one embodiment, graphics processor 1108 couples with ring based interconnect unit 1112 via an I/O link 1113.

In at least one embodiment, I/O link 1113 represents at least one of multiple varieties of I/O interconnects, including an on package I/O interconnect which facilitates communication between various processor components and a high-performance embedded memory module 1118, such as an eDRAM module. In at least one embodiment, each of processor core(s) 1102A-1102N and graphics processor 1108 use embedded memory modules 1118 as a shared Last Level Cache.

In at least one embodiment, processor core(s) 1102A-1102N are homogenous cores executing a common instruction set architecture. In at least one embodiment, processor core(s) 1102A-1102N are heterogeneous in terms of instruction set architecture (ISA), where one or more of processor core(s) 1102A-1102N execute a common instruction set, while one or more other cores of processor core(s) 1102A-1102N executes a subset of a common instruction set or a different instruction set. In at least one embodiment, processor core(s) 1102A-1102N are heterogeneous in terms of microarchitecture, where one or more cores having a relatively higher power consumption couple with one or more power cores having a lower power consumption. In at least one embodiment, processor 1100 can be implemented on one or more chips or as an SoC integrated circuit.

Inference and/or training logic 715 are used to perform inferencing and/or training operations associated with one or more embodiments. In at least one embodiment portions or all of inference and/or training logic 715 may be incorporated into processor 1100. For example, in at least one embodiment, training and/or inferencing techniques described herein may use one or more of ALUs embodied in graphics processor 1108, processor core(s) 1102A-1102N, or other components in FIG. 11. In at least one embodiment, weight parameters may be stored in on-chip or off-chip memory and/or registers (shown or not shown) that configure ALUs of graphics processor 1100/1108 to perform one or more machine learning algorithms, neural network architectures, use cases, or training techniques described herein.

Such components can be used for establishing and/or monitoring network connections.

Various embodiments can be described by the following clauses:
1. A computer-implemented method, comprising:
   receiving a request to establish a remote direct memory access (RDMA) connection between a client and a server;
   determining, from the request, one or more features associated with the RDMA connection;
   selecting, based at least on the one or more features, one or more modified connection parameters;
   causing an RDMA connection to be established between the client and the server using the one or more modified connection parameters;
   receiving a data packet to be transmitted using the RDMA connection;
   modifying one or more portions of the data package according to the one or more modified connection parameters; and
   causing the data packet to be transmitted using the RMDA connection.
2. The computer-implemented method of clause 1, wherein at least a portion of an initial set of connection parameters is different from at least a portion of the one or more modified connection parameters.
3. The computer-implemented method of clause 1, wherein the request is associated with a control path and the data packet is associated with a data path.
4. The computer-implemented method of clause 1, further comprising:
   determining a policy, from a policy datastore, based on the one or more features; and
   determining the one or more modified connection parameters from the policy.
5. The computer-implemented method of clause 4, wherein the policy is associated with one or more of a workload type, a connection type, the client, or the server.
6. The computer-implemented method of clause 1, further comprising:
   identifying the client; and
   determining, from a profile associated with the client, the one or more modified connection parameters.
7. The computer-implemented method of clause 1, wherein the one or more modified connection parameters are associated with a routing policy.
8. A processor comprising:
   one or more processing units to:
   determine a connection policy associated with an incoming connection request;
   send a modified connection request based, at least, on the connection policy;
   receive, along a connection established according to the modified connection request, a data package; and
   send a modified data package along the connection, the modified data package including one or more modified connection parameters based at least on the connection policy.
9. The processor of clause 8, wherein the one or more processing units are further to:
   determine one or more features of the incoming connection request; and
   select the connection policy based at least on the one or more features.
10. The processor of clause 8, wherein the one or more features includes one or more of a sender identity, a recipient identity, or a workload type.
11. The processor of clause 8, wherein the one or more processing units are further to:
   receive a connection policy update; and
   modify the connection policy based at least on the connection policy update.
12. The processor of clause 8, wherein the connection policy includes one or more routing policies for a workload transmitted along a data path.
13. The processor of clause 8, wherein the modified connection request is transparent to a sender of the incoming connection request.
14. The processor of clause 8, wherein an interface between an application associated with the data package is maintained according to an initial set of connection parameters after the connection is established.
15. A system comprising:
   one or more processing units to modify one or more connection parameters for a remote direct memory access (RDMA) connection and to intercept and modify incoming data packages associated with the RDMA connection to apply one or more modified connection parameters prior to transmission along the RDMA connection.
16. The system of clause 15, wherein the one or more processing units are further to identify a policy for the RDMA connection based on one or more features of an initial connection request.
17. The system of clause 16, wherein the one or more features include one or more of a sender identity, a recipient identity, or a workload type.
18. The system of clause 16, wherein an interface between a sending application associated with the RDMA connection is unchanged after the policy is implemented.
19. The system of clause 15, wherein the one or more processing units are further to:
   update the one or more modified connection parameters responsive to a firmware update.
20. The system of clause 15, wherein the system is comprised in at least one of:
   a system for performing simulation operations;
   a system for performing simulation operations to test or validate autonomous machine applications;
   a system for performing digital twin operations;
   a system for performing light transport simulation;
   a system for rendering graphical output;
   a system for performing deep learning operations;
   a system implemented using an edge device;
   a system for generating or presenting virtual reality (VR) content;
   a system for generating or presenting augmented reality (AR) content;
   a system for generating or presenting mixed reality (MR) content;
   a system incorporating one or more Virtual Machines (VMs);
   a system for performing operations for a conversational AI application;
   a system for performing operations for a generative AI application;
   a system for performing operations using a language model;
   a system for performing one or more generative content operations using a large language model (LLM);
   a system implemented at least partially in a data center;
   a system for performing hardware testing using simulation;
   a system for performing one or more generative content operations using a language model;
   a system for synthetic data generation;
   a collaborative content creation platform for 3D assets; or
   a system implemented at least partially using cloud computing resources.

Other variations are within spirit of present disclosure. Thus, while disclosed techniques are susceptible to various modifications and alternative constructions, certain illustrated embodiments thereof are shown in drawings and have been described above in detail. It should be understood, however, that there is no intention to limit disclosure to specific form or forms disclosed, but on contrary, intention is to cover all modifications, alternative constructions, and equivalents falling within spirit and scope of disclosure, as defined in appended claims.

Use of terms "a" and "an" and "the" and similar referents in context of describing disclosed embodiments (especially in context of following claims) are to be construed to cover both singular and plural, unless otherwise indicated herein or clearly contradicted by context, and not as a definition of a term. Terms "comprising," "having," "including," and "containing" are to be construed as open-ended terms (meaning "including, but not limited to,") unless otherwise noted. Term "connected," when unmodified and referring to physical connections, is to be construed as partly or wholly contained within, attached to, or joined together, even if there is something intervening. Recitation of ranges of values herein are merely intended to serve as a shorthand method of referring individually to each separate value falling within range, unless otherwise indicated herein and each separate value is incorporated into specification as if it were individually recited herein. Use of term "set" (e.g., "a set of items") or "subset," unless otherwise noted or contradicted by context, is to be construed as a nonempty collection comprising one or more members. Further, unless otherwise noted or contradicted by context, term "subset" of a corresponding set does not necessarily denote a proper subset of corresponding set, but subset and corresponding set may be equal.

Conjunctive language, such as phrases of form "at least one of A, B, and C," or "at least one of A, B and C," unless specifically stated otherwise or otherwise clearly contradicted by context, is otherwise understood with context as used in general to present that an item, term, etc., may be either A or B or C, or any nonempty subset of set of A and B and C. For instance, in illustrative example of a set having three members, conjunctive phrases "at least one of A, B, and C" and "at least one of A, B and C" refer to any of following sets: {A}, {B}, {C}, {A, B}, {A, C}, {B, C}, {A, B, C}. Thus, such conjunctive language is not generally intended to imply that certain embodiments require at least one of A, at least one of B, and at least one of C each to be present. In addition, unless otherwise noted or contradicted by context, term "plurality" indicates a state of being plural (e.g., "a plurality of items" indicates multiple items). A plurality is at least two items, but can be more when so indicated either explicitly or by context. Further, unless stated otherwise or otherwise clear from context, phrase "based on" means "based at least in part on" and not "based solely on."

Operations of processes described herein can be performed in any suitable order unless otherwise indicated herein or otherwise clearly contradicted by context. In at least one embodiment, a process such as those processes described herein (or variations and/or combinations thereof) is performed under control of one or more computer systems configured with executable instructions and is implemented as code (e.g., executable instructions, one or more computer programs or one or more applications) executing collectively on one or more processors, by hardware or combinations thereof. In at least one embodiment, code is stored on a computer-readable storage medium, for example, in form of a computer program comprising a plurality of instructions executable by one or more processors. In at least one embodiment, a computer-readable storage medium is a non-transitory computer-readable storage medium that excludes transitory signals (e.g., a propagating transient electric or electromagnetic transmission) but includes non-transitory data storage circuitry (e.g., buffers, cache, and queues) within transceivers of transitory signals. In at least one embodiment, code (e.g., executable code or source code) is stored on a set of one or more non-transitory computer-readable storage media having stored thereon executable instructions (or other memory to store executable instructions) that, when executed (i.e., as a result of being executed) by one or more processors of a computer system, cause computer system to perform operations described herein. A set of non-transitory computer-readable storage media, in at least one embodiment, comprises multiple non-transitory computer-readable storage media and one or more of individual non-transitory storage media of multiple non-transitory computer-readable storage media lack all of code while multiple non-transitory computer-readable storage media collectively store all of code. In at least one embodiment, executable instructions are executed such that different instructions are executed by different processors - for example, a non-transitory computer-readable storage medium store instructions and a main central processing unit ("CPU") executes some of instructions while a graphics processing unit ("GPU") executes other instructions. In at least one embodiment, different components of a computer system have separate processors and different processors execute different subsets of instructions.

Accordingly, in at least one embodiment, computer systems are configured to implement one or more services that singly or collectively perform operations of processes described herein and such computer systems are configured with applicable hardware and/or software that enable performance of operations. Further, a computer system that implements at least one embodiment of present disclosure is a single device and, in another embodiment, is a distributed computer system comprising multiple devices that operate differently such that distributed computer system performs operations described herein and such that a single device does not perform all operations.

Use of any and all examples, or exemplary language (e.g., "such as") provided herein, is intended merely to better illuminate embodiments of disclosure and does not pose a limitation on scope of disclosure unless otherwise claimed. No language in specification should be construed as indicating any non-claimed element as essential to practice of disclosure.

All references, including publications, patent applications, and patents, cited herein are hereby incorporated by reference to same extent as if each reference were individually and specifically indicated to be incorporated by reference and were set forth in its entirety herein.

In description and claims, terms "coupled" and "connected," along with their derivatives, may be used. It should be understood that these terms may be not intended as synonyms for each other. Rather, in particular examples, "connected" or "coupled" may be used to indicate that two or more elements are in direct or indirect physical or electrical contact with each other. "Coupled" may also mean that two or more elements are not in direct contact with each other, but yet still co-operate or interact with each other.

Unless specifically stated otherwise, it may be appreciated that throughout specification terms such as "processing," "computing," "calculating," "determining," or like, refer to action and/or processes of a computer or computing system, or similar electronic computing device, that manipulate and/or transform data represented as physical, such as electronic, quantities within computing system's registers and/or memories into other data similarly represented as physical quantities within computing system's memories, registers or other such information storage, transmission or display devices.

In a similar manner, term "processor" may refer to any device or portion of a device that processes electronic data from registers and/or memory and transform that electronic data into other electronic data that may be stored in registers and/or memory. As non-limiting examples, "processor" may be a CPU or a GPU. A "computing platform" may comprise one or more processors. As used herein, "software" processes may include, for example, software and/or hardware entities that perform work over time, such as tasks, threads, and intelligent agents. Also, each process may refer to multiple processes, for carrying out instructions in sequence or in parallel, continuously or intermittently. Terms "system" and "method" are used herein interchangeably insofar as system may embody one or more methods and methods may be considered a system.

In present document, references may be made to obtaining, acquiring, receiving, or inputting analog or digital data into a subsystem, computer system, or computer-implemented machine. Obtaining, acquiring, receiving, or inputting analog and digital data can be accomplished in a variety of ways such as by receiving data as a parameter of a function call or a call to an application programming interface. In some implementations, process of obtaining, acquiring, receiving, or inputting analog or digital data can be accomplished by transferring data via a serial or parallel interface. In another implementation, process of obtaining, acquiring, receiving, or inputting analog or digital data can be accomplished by transferring data via a computer network from providing entity to acquiring entity. References may also be made to providing, outputting, transmitting, sending, or presenting analog or digital data. In various examples, process of providing, outputting, transmitting, sending, or presenting analog or digital data can be accomplished by transferring data as an input or output parameter of a function call, a parameter of an application programming interface or interprocess communication mechanism.

Although discussion above sets forth example implementations of described techniques, other architectures may be used to implement described functionality, and are intended to be within scope of this disclosure. Furthermore, although specific distributions of responsibilities are defined above for purposes of discussion, various functions and responsibilities might be distributed and divided in different ways, depending on circumstances.

Furthermore, although subject matter has been described in language specific to structural features and/or methodological acts, it is to be understood that subject matter claimed in appended claims is not necessarily limited to specific features or acts described. Rather, specific features and acts are disclosed as exemplary forms of implementing the claims.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A computer-implemented method, comprising:
receiving a request to establish a remote direct memory access (RDMA) connection between a client and a server;
determining, from the request, one or more features associated with the RDMA connection;
selecting, based at least on the one or more features, one or more modified connection parameters;
causing an RDMA connection to be established between the client and the server using the one or more modified connection parameters;
receiving a data packet to be transmitted using the RDMA connection;
modifying one or more portions of the data package according to the one or more modified connection parameters; and
causing the data packet to be transmitted using the RMDA connection.

2. The computer-implemented method of claim 1, wherein at least a portion of an initial set of connection parameters is different from at least a portion of the one or more modified connection parameters.

3. The computer-implemented method of claim 1 or 2, wherein the request is associated with a control path and the data packet is associated with a data path.

4. The computer-implemented method of claim 1, 2, or 3, further comprising:
determining a policy, from a policy datastore, based on the one or more features; and
determining the one or more modified connection parameters from the policy, wherein the policy is associated with one or more of a workload type, a connection type, the client, or the server.

5. The computer-implemented method of any of claims 1 to 4, further comprising:
identifying the client; and
determining, from a profile associated with the client, the one or more modified connection parameters.

6. The computer-implemented method of any of claims 1 to 5, wherein the one or more modified connection parameters are associated with a routing policy.

7. A processor comprising:
one or more processing units to:
determine a connection policy associated with an incoming connection request;
send a modified connection request based, at least, on the connection policy;
receive, along a connection established according to the modified connection request, a data package; and
send a modified data package along the connection, the modified data package including one or more modified connection parameters based at least on the connection policy.

8. The processor of claim 7, wherein the one or more processing units are further to:
determine one or more features of the incoming connection request; and
select the connection policy based at least on the one or more features, wherein the one or more features includes one or more of a sender identity, a recipient identity, or a workload type.

9. The processor of claim 7 or 8, wherein the one or more processing units are further to:
receive a connection policy update; and
modify the connection policy based at least on the connection policy update, wherein the connection policy includes one or more routing policies for a workload transmitted along a data path.

10. The processor of claim 7, 8, or 9, wherein the modified connection request is transparent to a sender of the incoming connection request.

11. The processor of any of claims 7 to 10, wherein an interface between an application associated with the data package is maintained according to an initial set of connection parameters after the connection is established.

12. A system comprising:
one or more processing units to modify one or more connection parameters for a remote direct memory access (RDMA) connection and to intercept and modify incoming data packages associated with the RDMA connection to apply one or more modified connection parameters prior to transmission along the RDMA connection.

13. The system of claim 12, wherein the one or more processing units are further to identify a policy for the RDMA connection based on one or more features of an initial connection request, wherein the one or more features include one or more of a sender identity, a recipient identity, or a workload type, wherein an interface between a sending application associated with the RDMA connection is unchanged after the policy is implemented.

14. The system of claim 12 or 13, wherein the one or more processing units are further to:
update the one or more modified connection parameters responsive to a firmware update.

15. The system of claim 12, 13, or 14, wherein the system is comprised in at least one of:
a system for performing simulation operations;
a system for performing simulation operations to test or validate autonomous machine applications;
a system for performing digital twin operations;
a system for performing light transport simulation;
a system for rendering graphical output;
a system for performing deep learning operations;
a system implemented using an edge device;
a system for generating or presenting virtual reality (VR) content;
a system for generating or presenting augmented reality (AR) content;
a system for generating or presenting mixed reality (MR) content;
a system incorporating one or more Virtual Machines (VMs);
a system for performing operations for a conversational AI application;
a system for performing operations for a generative AI application;
a system for performing operations using a language model;
a system for performing one or more generative content operations using a large language model (LLM);
a system implemented at least partially in a data center;
a system for performing hardware testing using simulation;
a system for performing one or more generative content operations using a language model;
a system for synthetic data generation;
a collaborative content creation platform for 3D assets; or
a system implemented at least partially using cloud computing resources.
